Europäisches Patentamt

European Patent Office

Office européen des brevets

(19)

(11) Publication number: **0 045 626**

**A1**

(12) **EUROPEAN PATENT APPLICATION**

(21) Application number: **81303484.0**

(22) Date of filing: **30.07.81**

(51) Int. Cl.³: **B 65 G 51/34**
**B 65 G 51/08**

(30) Priority: **05.08.80 GB 8025502**

(43) Date of publication of application:
**10.02.82 Bulletin 82/6**

(84) Designated Contracting States:
**AT BE CH DE FR GB IT LI LU NL SE**

(71) Applicant: **D D Lamson Limited**
**Harbour Road**
**Gosport Hampshire PO12 1BG(GB)**

(72) Inventor: **Alexander, Donald**
**Parkbury Kiln Road**
**Fareham, Hampshire(GB)**

(74) Representative: **Townsend, Derek Thomas**
**Moore Research Centre Station Approach**
**Waltham Cross Herts EN8 7ND(GB)**

(54) **Improvements in or relating to pneumatic tube systems.**

(57) A pneumatic tube system with a pair of pneumatic tube carrier stations (1,2) with a tube (3) connecting the two stations, an air supply including an air supply tube (6) for alternatively supplying air under pressure or air under vacuum to a position in the tube (3) between the two stations (1,2), and valve means (7) in each link of the tube (3) between the respective stations (1,2) and the position at which air is supplied to the tube (3) to cut off the air supplied to the tube (3) between the valve (7) and the corresponding station and carrier detection means (8) to detect a carrier, said detector means (8) being located between the air supply position and the respective valve means (7) and being arranged to control the air supply and the valve means (7).

FIG.5

EP 0 045 626 A1

0045626

This invention has reference to pneumatic tube carrier systems.

Pnuematic tube carrier systems have been known for many years and include a pair of tubes connecting a pair of stations and with an air supply to move a carrier through the tubes between the stations. Normally a carrier was sent from a point of sale to a control desk through one tube and returned to the point of sale through the other tube. It is also known to provide a ring tube system connected between several stations connected in a ring in which a carrier passes from one station to any one of the other stations in the ring. The carrier however always moves around the ring in one direction.

It is also known to have a carrier tube system in which an air supply is arranged at one end of a system to move a carrier in one direction through the system under air pressure and to move a carrier in the other direction under vacuum. Thus in British Specification No.855344 there is described a message transmission of the type comprising a system of transmission tracks including a main line and a plurality of branch lines and sub-branch lines, means for supplying a transport mediun to convey a message carrier along the tracks, and means for controlling the passage of said carrier

- 1 -

from a point of despatch to a point of reception in which the track is provided with switching members in the proximity of each branch line and/or sub-branch line. which switching members are actuated by the carrier during its travel along the track to alter its direction of motion, and to regulate the speed and direction of the transport medium, all in accordance with a pre-determined routing schedule.

Also in British Specification No.1406172 there is described a pneumatic tube system having a main tube and a series of branch tubes connected to the main tube there being diverters respectively at the junctions of the main tube and branch tubes and the branch tubes being provided with stations respectively for dispatching a carrier into and receiving the carrier from the system and each station having a circuit with means for selecting an address of a station to receive the carrier, the system also having a pump for supplying alternately vacuum and air pressure in the tubes and a control circuit for controlling operation of the pump and the diverters to direct movement of the carrier from one of the stations to another of the stations wherein the control circuit includes means for scanning the circuits of the stations while the carrier is moving from one of the stations to another of the stations to that addresses may be received in the control circuit for carrying out operations for moving a sub-sequent carrier through the system.

It is an object of the present invention to provide an
improved and simple pneumatic tube carrier system.

According to the present invention a pneumatic tube
carrier system comprises a pair of pneumatic tube
carrier stations with a tube connecting the two
stations, an air supply for alternatively supplying
air under pressure or air under vacuum to a position
in the tube between the two stations and valve means
in each link of the tube between the respective
stations and the position at which the air is supplied to
the tube to cut off the air supplied to the tube between
that valve and the corresponding station, and carrier
detector means to detect a carrier said detector means
being located between the air supply position and the
respective valve means.

Embodiments of pneumatic tube carrier systems in
accordance with the present invention will now be
described by way of example with reference to the
accompanying drawing wherein:-
Fig.1 is a diagram of a pneumatic tube system
Figs.2 and 3 are detailed views
Fig.4 is a view of a modified system and
Fig.5 is a view of a further modified system
Referring to Fig.1 of the drawings there is shown a
pneumatic tube carrier system which comprises a pair
of complementary stations, 1,2 capable of receiving

- 3 -

a carrier despatched from the other complementary station or of despatching a carrier to that complementary station along a tube 3 joining the two stations.

An air moving machine 4 which may be either an exhauster or a blower is connected to the line 3 through a reversing valve 5 at a junction position 3a. The reversing valve 5 is arranged to supply air under pressure or air under vacuum to the tube 3. As shown it is positioned at approximately half way between the two stations 1 and 2. Adjacent the position 3a at which the tube line 6 joining the tube 3 is located in each arm of the tube 3 a gate valve 7 which serves to control the supply of air to the tube between that valve and the station at the end of that part of the tube 3, either by allowing the air to flow freely through the valve or to cut off the flow of air.

A detector switch 8 is positioned adjacent to the junction position 3a and so arranged that the detector means operates when a carrier has reached a position in the tube 3 adjacent the junction position 3a. The detector switch 8 is connected in an electric Control Circuit (not shown) other control devices (also not shown) for example switches at each of the stations 1, 2 which are operated when the carrier is ready to be despatched are also included in the control circuit.

- 4 -

When a carrier is ready to be sent from, for example, station 2 to station 1, the carrier is inserted in the tube and a control switch at that station is operated to indicate that a carrier is ready to be despatched. If the tube is available operation of the control switch causes the machine 4 to move air and the reversing valve is positioned to supply air under vacuum to the tube 3. The valve 7 on the left hand side of the junction position 3a is open and the valve 7 of the right hand side of the junction position is closed. The carrier is pulled through the tube 3 and past the valve 7 on the left hand side of the junction position 3a until its position is sensed by the detector switch 8 adjacent juntion position 3a. This detection causes the reversing valve 5 to reverse to supply air under pressure to the tube 3 and causes the valve 7 on the right hand side of junction position 3a to open and the valve on the left hand side of the junction position 3a to close. The carrier is thereby moved by air under pressure to the station.

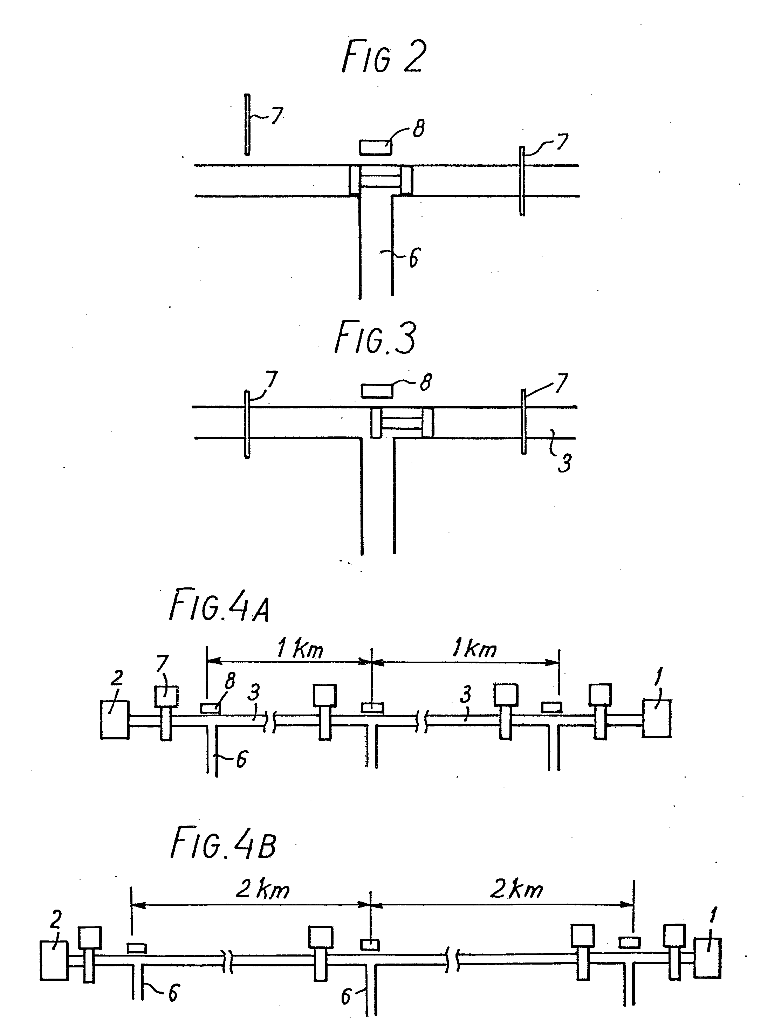

Referring to Figs. 2 and 3 of the drawings there is shown a carrier passing down the part of the tube 3 adjacent the tube line 6 connected to the air moving machine 4. As the carrier approaches the junction the leading end of the carrier moves out of the left hand part of the tube 3 into the right hand part.

The tube line 6 is below atmospheric pressure and the left hand side of the tube line (behind the carrier) is at substantially atmospheric pressure, whereas the right hand side of the tube 1 is at less than atmospheric pressure (because the gate valve 7 is closed.    Hence the front end of the carrier moves into the right hand side of the tube 1 as shown in Fig. 3 with the trailing end of the carrier out of the left hand side of the tube 1 - and probably the whole carrier being in the right hand side of the tube 1 beyond the tube line 6.    When the air moving machine is switched to supply air under pressure, the valve 7 on the left hand side closes, and the valve on the right hand side opens, whereby the air in the tube assumes an air pressure higher than atmospheric pressure and the air pressure is applied either to the front rings on the carrier or if the carrier is beyond the tube line 6 to the trailing rings on the carrier.    Thus the carrier continues its movement towards the exit station.

Referring to Fig.4 of the drawings, there is shown a modified system with a long tube 3 between stations. In accordance with known technology it is known to move carriers from one station to another when the stations are up to 1 kilometer apart.    The present system can be adopted to a system in which a station is included at one end with a series of tube lines 6 with gate valves in the tube 1 on one side of the respective tube lines 6 and with intermediate parts of the tube connected together rather than to stations.
Using the system as shown in Fig.4A the tube lines 6
can be connected intermediately on the tube lines
at up to 1 kilometer apart. Also as shown in Fig.4B
it is arranged that intermediate tube lines 6 are
connected to the tube 3 instead of a station and the
tube lines supply air under pressure or under vacuum
to reinforce each other. Thus as shown in Fig.4B
when a carrier moving from the station and passes the
first tube line 6 air is supplied from the first
tube line to the tube 1 under pressure and air is
supplied from the second tube line to the tube 1
under vacuum. Using this technique it is possible
to pass carriers through tubes with the tube lines
spaced up to 2 kilometers apart.

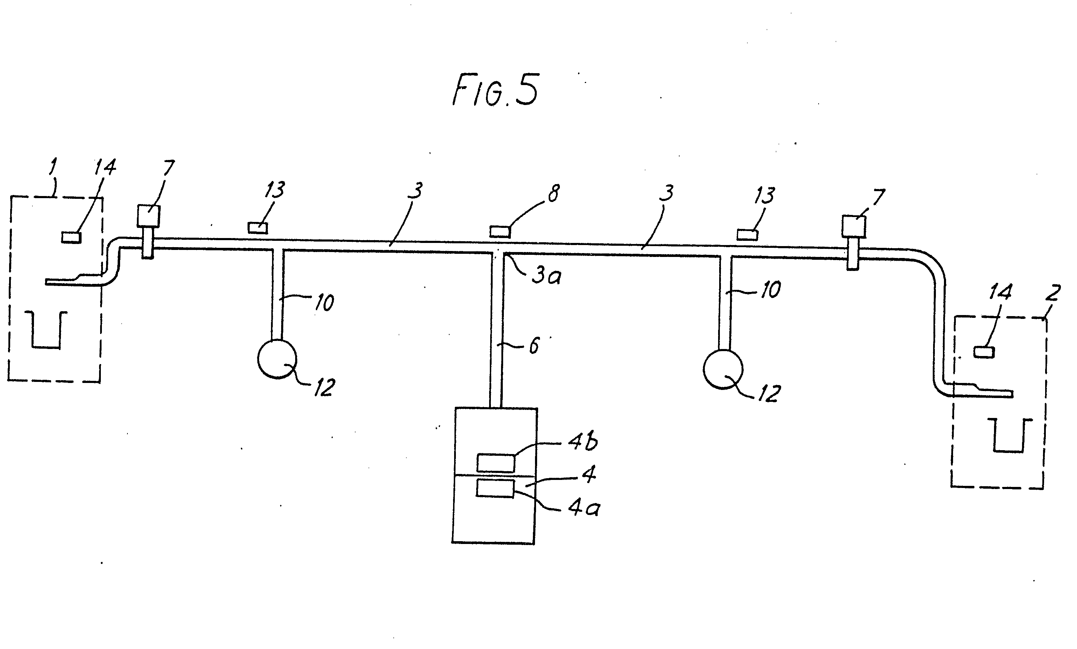

Referring to the embodiment shown in Fig.5 of the
drawings there is shown an air moving machine and
comprising a pair of motors with a fan similar to
that used in a domestic vacuum cleaner one motor 4a
being provided to supply air under vacuum and the
other motor 4b being provided to supply air under
pressure to the tube line 6 connected to the tube 3
at the junction position 3a. These motors 4a, 4b
are operational under the control of a control means
including a microprocessor speed regulating circuit
which may be as described in the specification of
our copending application for Patent No.————

- 7 -

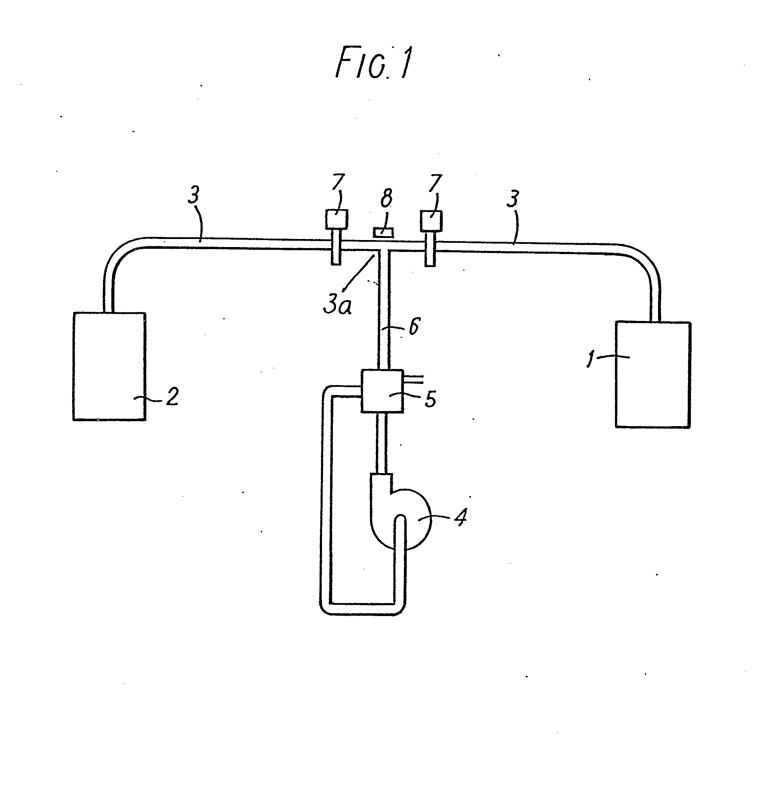

Each end of the tube is provided with station 1,2 having a gutter portion and adjacent each gutter portion a photoelectric sensing device 4 is positioned to indicate that a carrier has just been inserted into the system or has been despatched to the other end of the tube and has reached its destination. Adjacent each station 1,2 a gate valve 7 is positioned. This gate valve is similar to the gate valve 7 shown in Fig.1 and is operative to move from one position (closed) to the other position (open) by an electric motor. A short distance from the gate valve 7 is positioned an air escape tube 10 with a valve 12 in the tube 10. A detector switch 13 is positioned closely adjacent to the junction of the tubes 3 and 10. Similarly a detector switch 8 is positioned closely adjacent to the junction between the tube 3 and the tube line 6. These detector switches 8 and 9 detect the presence of a carrier passing through the tube 1.

In operation of the system shown in Fig.5 the system starts with all valves closed. A carrier is inserted into the system at the station 1 and it is detected by the photoelectric sensing device 14. This sensing is passed to the control means which serves to control the opening of the gate valve 7, adjacent to the sending station. The motor 4a to supply air under vacuum to the tube 1 is switched on and the power to the motor 4a (and hence the air under vacuum applied to the tube 3) increases in steps until the carrier moves.

- 8 -

Movement of the carrier is detected by the
photoelectric sensing device 14 and by the detector
switch 13 adjacent the sending station and a signal
is sent to the control means 15 to apply full
power to the motor 4a and open the valve 12 and closes
the valve 7.   When the carrier reaches the detector switch
8 the switch initiates switching off of the power to the
motor 4a and applies power after a delay of 2 to 3 seconds
to the motor 2 and to supply air under pressure to the
tube 1 and to close the valve 12 on the left hand side and
open the valve 12 on the right hand side.   The carrier
is then propelled along the tube by air under full pressure
until the carrier reaches the detector switch 13 adjacent
to the exit station.   The carrier is retarded because the gate 7
is closed and a barrier of air is formed before the gate.
The valve 12 is closed and the gate 5 adjacent to the exit
station is opened and the motor 4b is re-energised at the
same or equivalent power as when the carrier started to move.
The carrier is moved to the station 2 until the trailing
end of carrier moves out of the tube and stops.

WHAT WE CLAIM IS:

1. A pneumatic tube carrier system comprising a pair of pneumatic tube carrier stations with a tube connecting the two stations, an air supply including an air supply tube for alternatively supplying air under pressure or air under vacuum to a position in the tube between the two stations and valve means in each link of the tube between the respective stations and the position at which air is supplied to the tube to cut off the air supplied to the tube between that valve and the corresponding station, and carrier detector means to detect a carrier, said detector means being located between the air supply position and the respective valve means.

2. A pneumatic tube carrier system according to claim 1 wherein the detector means is positioned adjacent to the junction between the tube connecting the two stations and the tube supplying air under pressure or under vacuum.

3. A pneumatic tube carrier system according to claim 1 or 2 wherein the air supply includes an air exhauster or blower and a reversing valve.

4. A pneumatic tube carrier system according to claim 1 and 2 wherein the air supply includes a first motor to supply air under vacuum and a second motor to supply air under pressure.

5. A pneumatic tube carrier system constructed, arranged and adapted to operate substantially as herein described with reference to the accompanying

drawings.

1/3

FIG.1

## FIG 2

## FIG.3

## FIG.4A

1 Km    1 Km

## FIG.4B

2 km    2 km

# FIG.5

0045626

## European Patent Office

## EUROPEAN SEARCH REPORT

| Category | Citation of document with indication, where appropriate, of relevant passages | Relevant to claim |
|---|---|---|
| X | DE - A1 - 2 449 956 (STANDARD ELEKTRIK LORENZ AG)<br>* complete document *<br>— | 1-3 |
| X | DE - B2 - 2 202 228 (SIEMENS AG)<br>* column 4, lines 33 to 62; fig. 1 *<br>— | 1-3 |
|  | CH - A - 431 386 (STANDARD TELEPHON UND RADIO AG)<br>* column 2, line 1 to column 3, line 30; fig. *<br>& US - A - 3 265 324<br>— | 1,2,4 |
|  | CH - A - 451 819 (STANDARD TELEPHON UND RADIO AG)<br>* column 1, line 19 to column 2, line 19 *<br>— | 1,2 |
|  | DE - B - 1 289 493 (TONNE)<br>* column 3, line 42 to column 4, line 50 *<br>— | 1 |
|  | DE - B - 1 270 499 (SIEMENS AG)<br>* column 1, lines 1 to 14 *<br>— | 3 |
| D | GB - A - 1 406 172 (LAMSON ENGINEERING CO. LTD.)<br>—<br>./.. |  |

### DOCUMENTS CONSIDERED TO BE RELEVANT

### CLASSIFICATION OF THE APPLICATION (Int. Cl.³)

B 65 G 51/34
B 65 G 51/08

### TECHNICAL FIELDS SEARCHED (Int. Cl.³)

B 65 G 51/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 26-10-1981 | SIMON |

EPO Form 1503.1 06.78

0045626

**European Patent Office**

**EUROPEAN SEARCH REPORT**

Application number

EP 81 30 3484.0

— page 2 —

## DOCUMENTS CONSIDERED TO BE RELEVANT

| Category | Citation of document with indication, where appropriate, of relevant passages | Relevant to claim |
|---|---|---|
| A | GB – A – 1 071 950 (INTERNATIONAL STANDARD ELECTRIC CORP.) -- | |
| A | DE – A – 2 235 581 (LUCAS-ORGANISATION E. LUCAS) ---- | |

**CLASSIFICATION OF THE APPLICATION (Int. Cl.³)**

**TECHNICAL FIELDS SEARCHED (Int. Cl.³)**